# EUROPEAN PATENT APPLICATION

(11) **EP 3 878 674 A1**
(43) Date of publication of application: **15.09.2021**
(21) Application number: 18939742.5
(22) Date of filing: 08.11.2018
(51) Int. Cl.: B60K 6/365, B60K 6/22, B60K 1/02, F16H 3/44

(54) **HYBRID POWER MODULE AND VEHICLE**

(71) Applicant: Schaeffler Technologies AG & Co. KG, 91074 Herzogenaurach (DE)
(72) Inventor: XU, Junjie, Shanghai 201201 (CN); HUANG, Bo, Shanghai 201804 (CN)
(86) International application number: PCT/CN2018/114522
(87) International publication number: WO 2020/093301

(57) **Abstract**

The present invention relates to a hybrid power module for a vehicle, comprising: a hybrid power transmission, a first motor, and a second motor, wherein the hybrid power transmission comprises a transmission input part connected to an internal combustion engine of the vehicle, a transmission output part, a first planetary gear mechanism connected to the transmission input part, and a second planetary gear mechanism connected to the transmission output part, wherein the transmission input part is rotationally fixedly connected with a first ring gear, power is transmitted between the first motor and a first sun gear, power is transmitted between the second motor and a second sun gear, a second ring gear is fixed to a transmission housing, and the transmission output part is rotationally fixedly connected with a second planetary carrier, wherein a gear-shifting device is disposed in the hybrid power transmission, one end of the gear-shifting device is rotationally fixedly connected with a first planetary carrier, and the other end thereof is selectively engaged with the second sun gear, or engaged with the second planetary carrier, or kept in a neutral state. The present invention further relates to a vehicle comprising the above hybrid power module.

## Description

### Technical Field

The present invention relates to the technical field of vehicles, and in particular, a hybrid power module for a vehicle. The hybrid power module comprises a hybrid power transmission and two motors. The present invention further particularly relates to a vehicle comprising the above hybrid power module.

### Background

In a current plug-in hybrid drive system, two motors are disposed to be connected to a hybrid power transmission, and an internal combustion engine is connected to the hybrid power transmission. Therefore, the hybrid power transmission can implement a plurality of operating modes. In addition, in this design solution, planetary gear mechanisms are often disposed, because as for the drive mode, a planetary gear has the advantages of small mass, small size, large transmission ratio, large carrying capacity, smooth transmission, and high transmission efficiency compared with an ordinary fixed-shaft gear. For example, US Patent No. 5558595 discloses a parallel hybrid power transmission for a vehicle, wherein a planetary gear mechanism is disposed in the hybrid power transmission, and an internal combustion engine and two motors drive the vehicle via the hybrid power transmission. For another example, a hybrid power module for a vehicle is also disclosed in Chinese patent application No. CN 107249917 A, wherein the hybrid power module has two planetary gear mechanisms, and two motors in the hybrid vehicle can transmit power to the two planetary gear mechanisms respectively.

However, in the above design solution, both the internal combustion engine and the motor working under a motor mode can only provide a single gear. On the one hand, it is not enough to optimize an operating point of the internal combustion engine or the motor. On the other hand, the vehicle cannot provide an enough speed during high-speed driving, and cannot provide enough torque during low-speed driving.

In addition, for example, while driving in cities, the efficiency of the internal combustion engine is very low due to the low vehicle speed. Therefore, it is often designed to disconnect the internal combustion engine from the hybrid power transmission in this case and rely on only one motor working in an electric motor mode to output power. In this case, for example, due to the characteristics of the planetary gear mechanism, it can occur that the motor drives rotating parts in the hybrid power transmission that are not used for power transmission at this moment to rotate together, which causes a large amount of rotational losses.

### Summary

Therefore, the technical problem to be solved by the present invention is to provide a hybrid power module for a vehicle, so that the vehicle, especially a hybrid vehicle, can balance power performance and fuel economy under various driving conditions; and in addition, the hybrid power module can also reduce rotational losses.

The above technical problems are solved by a hybrid power module for a vehicle. The hybrid power module comprises a hybrid power transmission, a first motor and a second motor, wherein the hybrid power transmission comprises a transmission input part connected to an internal combustion engine of the vehicle, a transmission output part, a first planetary gear mechanism connected to the transmission input part, a second planetary gear mechanism connected to the transmission output part, and a transmission housing. The two planetary gear mechanism each comprise a sun gear, a planetary carrier, and a ring gear, that is, the first planetary gear mechanism comprises a first sun gear, a first planetary carrier, and a first ring gear; and the second planetary gear mechanism comprises a second sun gear, a second planetary carrier, and a second ring gear. The transmission input part is, for example, a shaft connected to a crank of an internal combustion engine, so that power generated by the internal combustion engine can be transmitted to the hybrid power transmission. The transmission output part may be a shaft or gear that transmits power to a differential mechanism.

According to the present invention, the transmission input part is rotationally fixedly connected with the first ring gear, power is transmitted between the first motor and the first sun gear, power is transmitted between the second motor and the second sun gear, the second ring gear is fixed to the transmission housing, and the transmission output part is rotationally fixedly connected with the second planetary carrier; wherein a gear-shifting device is disposed in the hybrid power transmission, one end of the gear-shifting device is rotationally fixedly connected with the first planetary carrier, and the other end thereof is selectively engaged with the second sun gear, or engaged with the second planetary carrier, or kept in a neutral state. Therefore, the hybrid power module can provide three gears. When the other end of the gear-shifting device is engaged with the second sun gear, power can be transmitted between the first planetary carrier and the second sun gear, and especially when the vehicle speed is low, the two motors can provide larger output torque through the gear. When the other end of the gear-shifting device is engaged with the second planetary carrier, power can be transmitted between the first planetary carrier and the second planetary carrier, and especially when the vehicle speed is high, the internal combustion engine and the first motor can provide a greater driving speed through the gear. When the other end of the gear-shifting device is in neutral, the first planetary gear mechanism is disconnected from the second planetary gear mechanism; and especially when the second motor operates alone, only corresponding components of the second planetary gear mechanism rotate, while components of the first planetary gear mechanism and the second ring gear do not rotate, thereby reducing rotational losses. In the present invention, the "input" and "output" are descriptions based on the direction of power transmission in the hybrid power transmission when the vehicle is driven by an internal combustion engine or a motor, which is not limited to the direction of power transmission on the transmission input part or the transmission output part in a specific working mode. In addition, power can be transmitted between the first motor and the first sun gear, and power can be transmitted between the second motor and the second sun gear. When the motor is running in an electric motor mode, the motor transmits power to the planetary gear mechanism, and when the motor is running in a generator mode, for example, when charging is performed by recovering surplus power, the planetary gear mechanism transmits power to the motor. In addition, one end and the other end of the gear-shifting device are one or more components, which are defined for convenience of explanation, or are a part of components with other functions.

In a preferred embodiment, the first planetary gear mechanism and the second planetary gear mechanism are arranged on the same axis of rotation, wherein the gear-shifting device is disposed between the first planetary gear mechanism and the second planetary gear mechanism. Therefore, the two planetary gear mechanisms can be arranged regularly, which reduces the size of the hybrid power module, and is particularly favorable for the connection between the gear-shifting device and the two planetary gear mechanisms.

Advantageously, the first motor is arranged between the first planetary gear mechanism and the gear-shifting device, wherein the first planetary gear mechanism and the first motor are arranged on the same axis of rotation, wherein the first motor and the first sun gear transmit power through a hollow shaft, and a transmission shaft used to transmit power between the first planetary carrier and the gear-shifting device extends and penetrates out of the hollow shaft and the radial inner side of the first motor. For example, the first motor is an inner rotor type motor, the hollow shaft and the rotor are connected on the same axis of rotation, and the hollow shaft and the first motor are sleeved on the transmission shaft rotationally fixedly connected with the first planetary carrier.

Advantageously, a connecting portion for rotationally fixedly connecting the gear-shifting device to the second planetary carrier is sleeved on a connecting portion for rotationally fixedly connecting the gear-shifting device to the second sun gear. For example, in terms of the power transmission direction when a vehicle is driven by an internal combustion engine, the gear-shifting device according to the present invention has one input end and two output ends. In this advantageous embodiment, the connecting portion for connecting one of the output ends to the second planetary carrier is sleeved on the connecting portion for connecting the other output end to the second sun gear, thereby implementing a compact arrangement structure.

In another preferred embodiment, the transmission output part is designed as a transmission output gear, and the transmission output gear is rotationally fixedly connected with the second planetary carrier. The transmission output gear can, for example, directly mesh with a driven gear of a differential mechanism, to transmit power to the next stage.

Advantageously, the transmission output gear is located on a side of the second planetary gear mechanism, with the side facing toward the gear-shifting device. This facilitates a compact arrangement.

In another preferred embodiment, the gear-shifting device is a synchronizer. Therefore, the gear-shifting function can be advantageously realized. Alternatively, the gear-shifting device may also be a jaw clutch.

In another preferred embodiment, the second planetary gear mechanism and the second motor are arranged on the same axis of rotation. This is beneficial to reducing the radial height of the hybrid power module.

Advantageously, the first planetary gear mechanism, the first motor and the second planetary gear mechanism are arranged on the same axis of rotation. Therefore, a compact arrangement structure is achieved.

The above technical problem is also solved by using a vehicle having the above hybrid power module. Therefore, a vehicle, especially a hybrid vehicle, combined with different modes of an internal combustion engine, a first motor, a second motor, and a gear-shifting device thereof, can provide a plurality of operating modes through the above hybrid power module, such as a pure electric drive mode, a pure internal combustion engine drive mode, a hybrid drive mode, a recycling charging mode, and a standard charging mode. Therefore, a hybrid vehicle can balance power performance and fuel economy under various driving conditions; and in addition, the hybrid power module can also reduce rotational losses.

### Brief Description of the Drawings

Preferred embodiments of the present invention will be schematically illustrated below with reference to drawings. Drawings are as follows:

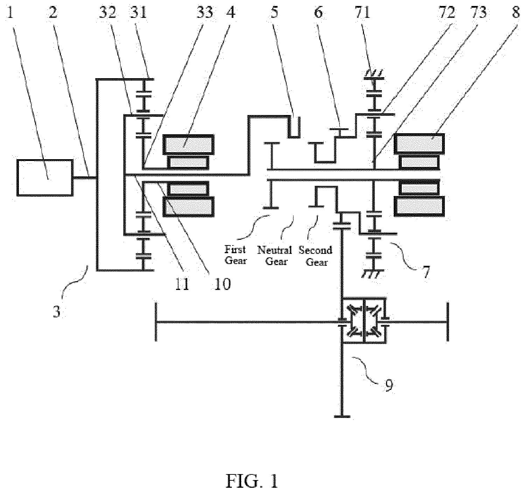

FIG. 1 is a schematic diagram of a hybrid power module according to a preferred embodiment of the present invention.

### Detailed Description of Embodiments

FIG. 1 schematically shows a hybrid power module according to a preferred embodiment of the present invention. The hybrid power module is preferably used in a hybrid vehicle. As shown in the figure, the hybrid power module comprises a hybrid power transmission, a first motor 4 and a second motor 8. The hybrid power transmission comprises a transmission input shaft 2 (i.e., a transmission input part) connected to an internal combustion engine 1 of the vehicle, a first planetary gear mechanism 3, a second planetary gear mechanism 7, a transmission output gear 6 (i.e., a transmission output part) for transmitting power to a differential mechanism 9, a gear-shifting device, and a transmission housing. The gear-shifting device is designed to serve as a synchronizer 5.

In this preferred embodiment, the transmission input shaft 2, the first planetary gear mechanism 3, the first motor 4, the second planetary gear mechanism 7 and the second motor 8 are sequentially arranged on the same axis of rotation, wherein the synchronizer 5 is arranged between the first motor 4 and the second planetary gear mechanism 7. Alternatively, the second motor 8 can be arranged in an offset mode, i.e., the second motor 8 is arranged on a different axis of rotation with respect to the second planetary gear mechanism 7. The first planetary gear mechanism 3 comprises a first sun gear 33, a first planetary carrier 32, and a first ring gear 31. The second planetary gear mechanism 7 comprises a second sun gear 73, a second planetary carrier 72, and a second ring gear 71. The synchronizer 5 has an engagement end and two gear ends, namely a first gear end and a second gear end, wherein the engagement end can be selectively engaged with the first gear end, or engaged with the second gear end, or kept in a neutral position. The transmission input shaft 2 is rotationally fixedly connected with the first ring gear 31. The first motor 4 and the first sun gear 33 transmit power through a hollow shaft 10, and the first planetary carrier is rotationally fixedly connected with the engagement end of the synchronizer 5 through a transmission shaft 11 extending on the radial inner side of the hollow first motor shaft 10. Power can be transmitted between the second motor 8 and the second sun gear 73, the second ring gear 71 is fixed on the transmission housing, and the transmission output gear 6 is rotationally fixedly connected with the second planetary carrier 72, wherein the transmission output gear 6 is arranged on the same axis of rotation on a side of the second planetary gear mechanism 7, with the side facing toward the synchronizer 5. The first gear end is connected to the second sun gear 73 through a first connecting portion, and the second gear end is connected to the second planetary carrier 72 through a second connecting portion, wherein the second connecting portion and the transmission output gear 6 are sleeved on the first connecting portion.

Therefore, the hybrid power module can provide three gears according to the preferred embodiment of the present invention:
(1) First gear: the engagement end of the gear-shifting device 5 is engaged with the first gear end. In this case, power can be transmitted between the first planetary carrier 32 of the first planetary gear mechanism 3 and the second sun gear 73 of the second planetary gear mechanism 7. Therefore, when the vehicle speed is low, the first motor 4 and the second motor 8 can provide larger output torque through the first gear.
(2) Second gear: the engagement end of the gear-shifting device 5 is engaged with the second gear end. In this case, power can be transmitted between the first planetary carrier 32 of the first planetary gear mechanism 3 and the second planetary carrier 72 of the second planetary gear mechanism 7. Therefore, when the vehicle speed is high, the internal combustion engine 1 and the first motor 4 can provide a greater driving speed through the second gear.
(3) Neutral gear: the engagement end of the gear-shifting device 5 is neither engaged with the first gear end nor engaged with the second gear end. In this case, the first planetary gear mechanism 3 and the second planetary gear mechanism 7 are disconnected. Therefore, when the second motor operates alone, if the gear-shifting device 5 is in the neutral position, only corresponding components of the second planetary gear mechanism 7 will rotate, while components of the first planetary gear mechanism won't rotate, thereby reducing rotational losses.

Through the hybrid power module according to the preferred embodiment, it is possible to provide a plurality of operating modes according to different modes of the internal combustion engine 1, the first motor 4, the second motor 11 and the gear-shifting device 5, such as a pure electric drive mode, a pure internal combustion engine drive mode, a hybrid drive mode, a recycling charging mode, and a standard charging mode.

Although possible embodiments have been described illustratively in the above description, it should be understood that there are still a large number of embodiment variations through combinations of all known technical features and embodiments as well as those are readily apparent to those skilled in the art. In addition, it should be further understood that the exemplary embodiments are just examples and shall not in any way limit the scope of protection, application and construction of the present invention. The foregoing description is more intended to provide those skilled in the art with a technical guide for converting at least one exemplary embodiment, in which various changes, especially changes in the functions and structures of the components, can be made as long as they do not depart from the scope of protection of the claims.

### List of Reference Numerals

- 1: Internal combustion engine
- 2: Transmission input part, transmission input shaft
- 3: First planetary gear mechanism
- 31: First ring gear
- 32: First planetary carrier
- 33: First sun gear
- 4: First motor
- 5: Gear-shifting device, synchronizer
- 6: Transmission output part, transmission output gear
- 7: Second planetary gear mechanism
- 71: Second ring gear
- 72: Second planetary carrier
- 73: Second sun gear
- 8: Second motor
- 9: Differential mechanism
- 10: Hollow shaft, first motor shaft
- 11: Transmission shaft

## Claims

1. A hybrid power module for a vehicle, comprising: a hybrid power transmission, a first motor (4) and a second motor (8), wherein the hybrid power transmission comprises a transmission input part (2) connected to an internal combustion engine (1) of the vehicle, a transmission output part (6), a first planetary gear mechanism (3) connected to the transmission input part (2), a second planetary gear mechanism (7) connected to the transmission output part (6), and a transmission housing, wherein the first planetary gear mechanism (3) comprises a first sun gear (33), a first planetary carrier (32), and a first ring gear (31), and the second planetary gear mechanism (7) comprises a second sun gear (73), a second planetary carrier (72), and a second ring gear (71),
wherein the transmission input part (2) is rotationally fixedly connected with the first ring gear (31), power is transmitted between the first motor (4) and the first sun gear (33), power is transmitted between the second motor (8) and the second sun gear (73), the second ring gear (71) is fixed to the transmission housing, and the transmission output part (6) is rotationally fixedly connected with the second planetary carrier (72),
wherein a gear-shifting device (5) is disposed in the hybrid power transmission, one end of the gear-shifting device (5) is rotationally fixedly connected with the first planetary carrier (32), and the other end thereof is selectively engaged with the second sun gear (73), or engaged with the second planetary carrier (72), or kept in a neutral state.

2. The hybrid power module according to claim 1, wherein the first planetary gear mechanism (3) and the second planetary gear mechanism (7) are arranged on the same axis of rotation, wherein the gear-shifting device (5) is disposed between the first planetary gear mechanism (3) and the second planetary gear mechanism (7).

3. The hybrid power module according to claim 2, wherein the first motor (4) is arranged between the first planetary gear mechanism (3) and the gear-shifting device (5), wherein the first planetary gear mechanism (3) and the first motor (4) are arranged on the same axis of rotation, wherein the first motor (4) and the first sun gear (33) transmit power through a hollow shaft (10), and a transmission shaft (11) used to transmit power between the first planetary carrier (32) and the gear-shifting device (5) extends and passes through the hollow shaft (10) and the first motor (4).

4. The hybrid power module according to claim 2, wherein a connecting portion for rotationally fixedly connecting the gear-shifting device (5) to the second planetary carrier (72) is sleeved on a connecting portion for rotationally fixedly connecting the gear-shifting device (5) to the second sun gear (73).

5. The hybrid power module according to claim 1, wherein the transmission output part is a transmission output gear (6), and the transmission output gear (6) is rotationally fixedly connected with the second planetary carrier (72).

6. The hybrid power module according to claim 5, wherein the transmission output gear (6) is located on a side of the second planetary gear mechanism (7), with the side facing toward the gear-shifting device (5).

7. The hybrid power module according to claim 1, wherein the gear-shifting device (5) is a synchronizer.

8. The hybrid power module according to claim 1, wherein the second planetary gear mechanism (7) and the second motor (8) are arranged on the same axis of rotation.

9. The hybrid power module according to claim 8, wherein the first planetary gear mechanism (7), the first motor (4) and the second planetary gear mechanism (7) are arranged on the same axis of rotation.

10. A vehicle, wherein the vehicle has a hybrid power module according to any one of the preceding claims.
